(19) Europäisches Patentamt
European Patent Office
Office européen des brevets

(11) **EP 3 328 749 B1**

(12) **EUROPEAN PATENT SPECIFICATION**

(45) Date of publication and mention
of the grant of the patent:
**18.11.2020 Bulletin 2020/47**

(21) Application number: **16829496.5**

(22) Date of filing: **26.07.2016**

(51) Int Cl.:
**B65D 81/18** (2006.01)          **B65B 25/04** (2006.01)
**A23B 7/148** (2006.01)

(86) International application number:
**PCT/AU2016/050664**

(87) International publication number:
**WO 2017/015709 (02.02.2017 Gazette 2017/05)**

(54) **MONITORING STATE OF PRODUCE WITHIN TRANSPORT CONTAINERS**

ÜBERWACHUNG DES ZUSTANDES VON WAREN IN TRANSPORTBEHÄLTERN

SURVEILLANCE DE L'ÉTAT DE PRODUITS DANS DES CONTENEURS DE TRANSPORT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.07.2015 AU 2015902983
21.09.2015 AU 2015903843**

(43) Date of publication of application:
**06.06.2018 Bulletin 2018/23**

(73) Proprietor: **Avcatech Laboratories Pty Ltd
Essendon Fields, VIC 3041 (AU)**

(72) Inventors:
• **SAVUR, Sanjay**
**Victoria 3149 (AU)**
• **JONES, Lee**
**Victoria 3149 (AU)**
• **JORDAN, Rodney**
**Victoria 3149 (AU)**

(74) Representative: **Murgitroyd & Company
Murgitroyd House
165-169 Scotland Street
Glasgow G5 8PL (GB)**

(56) References cited:
**EP-A2- 0 136 042          WO-A1-2006/086827
WO-A1-2012/149611          WO-A1-2014/066952
US-A1- 2006 199 267          US-A1- 2013 013 099**

**Description**

**Field of the invention**

The present invention relates to the monitoring of the state of produce within transport containers. It has particular application to dynamic monitoring of the respiration rate of produce in controlled atmosphere container systems used in cargo container transportation.

**Background of the invention**

It is common for storing and shipping of perishable products such as fruits or vegetables over extended periods to provide refrigeration to maintain the freshness of the goods. As many agricultural products must be shipped relatively long distances to remote markets, it is necessary to maintain the freshness of these goods after harvest during the sometimes lengthy time periods required for shipping and distribution.

In addition to refrigeration, it is also well known that perishable products can be maintained in fresher condition at refrigerated temperatures by maintaining in an atmosphere which is less conducive to rapid ripening and spoilage.

In early examples of controlled atmosphere systems for refrigerated containers, the modified atmosphere within the container was established after loading, and not further modified during the period of storage or transportation. Problems with such systems included leakage both into and out of the container which had the effect of changing the atmosphere.

Subsequent advances have provided for monitoring of oxygen and carbon dioxide levels within the container and have included providing sources of gas, such as nitrogen and/or carbon dioxide sources, to allow selective modification of the atmosphere during storage and transportation. However, the need for supplies of gases required to maintain the desired atmosphere during normal durations of transportation presented a drawback to such solutions.

In more recent known systems, a container loaded with perishable products is initially flushed with a nitrogen gas to reduce the oxygen level to an initial base level, and thereafter oxygen levels are controlled by selective inflow of ambient air, under control of a controller configured to receive data regarding gas constituents of the container atmosphere from one or more sensors. The carbon dioxide levels ($CO_2$) are maintained below a predetermined maximum by the use of a suitable $CO_2$ scrubber device.

As an example of this, the applicant's patented method and system involves apparatus for adjusting an atmosphere within a shipping container containing respiring produce, comprising an inlet to permit ambient atmosphere to enter the container, an outlet arranged to permit container atmosphere to exit the container, a controller having an $O_2$ concentration sensor and a control device responsive to the $O_2$ concentration sensor, the control device configured to admit ambient atmosphere into the container via the inlet following the $O_2$ concentration sensor detecting that the $O_2$ concentration has fallen below a predetermined level, and a $CO_2$ remover adapted to remove $CO_2$ at a predetermined rate so that the container $CO_2$ concentration will not substantially exceed a predetermined non-zero level, the apparatus not having a device to actively monitor and control $CO_2$ levels within the container.

As the produce continues to consume $O_2$, and hence $CO_2$ will continue to be produced, a prediction is made based on the desired $CO_2$ setpoint, that is, the difference between the predicted $CO_2$ level (based on the predicted rate of consumption of $O_2$ by the produce) and the desired level. Independent control of the $CO_2$ level is achieved by introducing a number of standard size bags of hydrated lime ($CO_2$ scrubbers) as $CO_2$ removers into the container, the bag contents enclosed within a membrane of known permeability to $CO_2$, so as to absorb the difference between the predicted and desired levels. In practice this is done by the use of lookup tables, the result indicating exactly how many bags to load into the container.

This approach provided a major breakthrough in CA systems, in that it allowed carbon dioxide levels in the chamber to be adjusted to a required level merely by monitoring of the $O_2$ levels around an oxygen setpoint. $CO_2$ levels in the chamber can be accurately predicted before transport of the produce, thus avoiding the requirement for active monitoring and control of the $CO_2$ levels during transport. This obviates the need for complex and costly $CO_2$ monitoring and control apparatus. The prediction of the $CO_2$ level is based on, amongst other things, the weight of the cargo, the type of produce (and thus its respiration quotient), the temperature in the chamber, and the time during which the cargo will be in transit.

In such dynamic controlled atmosphere systems, the CA controller uses a microprocessor to control the system (ie. to operate the ambient atmosphere admission in response to the measured $O_2$ level) according to a specific control algorithm.

The admitting of ambient atmosphere in response to the monitoring of the container atmosphere can be realised by positive infusion of air into the container (eg. by operating a fan or other pumping means), or by opening a valve to permit air ingress, or by a combination of the two.

Parameters such as $O_2$ concentration and temperature are measured by suitable sensors operatively coupled to a digital data logger (as part of the controller, or operatively connected to the controller) or other type of memory upon which the measurements can be stored. Other data associated with the transportation container and/or controlling apparatus (such as valve opening times and durations) can also be measured and stored on the data logger. The data thus gathered over the course of a voyage can be accessed for analysis. Typically this is done by making a wired connection to the data logger once the shipping container has reached its destination, and downloading the data therefrom. More recently, remote monitoring has been made possible by data loggers equipped with wireless communications functionality (eg. a GSM or GPRS modem), allowing remote data acquisition from containers in transit.

In the applicant's invention described in PCT/AU2014/050215 a communication module is provided in a shipping container, operatively coupled to the data logger, controlled to periodically perform time-limited network searches and to power down between searches, resulting in very low power consumption. PCT patent application nos. WO 2012/149611 A1 and WO 2006/086827 A1, and US patent application no. US 2013/0013099 A1 are useful for understanding the present invention.

Any discussion of documents, acts, materials, devices, articles and the like in this specification is included solely for the purpose of providing a context for the present invention. It is not suggested or represented that any of these matters formed part of the prior art base or were common general knowledge in the field relevant to the present invention as it existed in Australia or elsewhere before the priority date of each claim of this application.

**Summary of the invention**

A method for tracking is disclosed, over an extended period, the respiration rate of produce contained in a leaky transport container, including the steps of:

at intervals during said extended period, for a prescribed period, being a respiration rate data block (RRDB) cycle, ensuring that there is substantially no air passage between the interior and the exterior of the transport container other than leakage;
identifying the leakage rate of the transport container;
measuring, at intervals over said RRDB cycle, the concentration of one or more constituent gases in the transport container as the produce respires;
calculating, at a logic unit, from said measurements of concentrations of said one or more constituent gases and said leakage rate, a respiration rate of the produce for each RRDB cycle.

The term 'leaky transport container' relates to the fact that in practice most if not all transport containers have a degree of leakage between the interior and the exterior. So long as the leakage rate is substantially less than the respiration rate of the produce, such leakage is generally acceptable.

The step of ensuring that there is substantially no air passage between the interior and the exterior of the transport container other than leakage may involve closing or maintaining closed any valves or outlets in the transport container generally used for atmosphere control or other purposes, and/or by shutting off operation of a fan or other forced air means.

The step of identifying the leakage rate of the transport container may involve measuring container leakage for each RRDB cycle.

Alternatively, the step of identifying the leakage rate of the transport container may involve accessing or inputting a stored leakage rate for the particular transport container. This may be measured at the beginning of the extended period (eg. after cargo loading and container closure), or it may be a standard leakage rate, ie. a recognised leakage rate for a particular container or type of container.

The step of measuring, at intervals over said RRDB cycle, the concentration of one or more constituent gases in the transport container, preferably involves sensing and storing the concentration of oxygen. In addition or alternatively it may involve sensing and storing the concentration of carbon dioxide and/or other gases.

The step of calculating the respiration rate of the produce for each RRDB cycle may involve a differential analysis of the concentration of one or more of the constituent gases. Preferably, it involves analysing the regression slope of the concentration of one or more of the constituent gases, ideally the oxygen concentration.

The prescribed period (of the RRDB cycle, being the period over which RRDB measurements are taken, referred to below as 'RRM mode') need not be a set length of time, but may be determined on the basis of measurements made. In particular, it may be the shorter of (a) a set length of time and (b) the period until which the concentration of one or more of the constituent gases is determined to have reached a threshold. That threshold may be an absolute value, or may be a deviation from a prescribed value. Preferably, the threshold is a deviation from an oxygen setpoint which has been determined for that produce.

The extended period may be over a voyage of the transport container from an origin to a destination. Alternatively it may be over a period of stationary storage, or a combination of transport and storage.

The method may in whole or in part be carried out under management by a transport container controller, the controller programmed to provide control of the atmosphere within the transport container during said extended period.

The controller may include or be in operative connection with a communication unit arranged to transmit data to a remote site for storage and analysis of the measured data. The data may be transmitted wirelessly. The remote site may be a central server arranged to process the data from a plurality of transport containers.

The transmitted data for each RRDB cycle may include any one or more of: a header; a timestamp; a termination code; a data regression slope; a data regression offset; a data correlation coefficient; a data variance; a data mean; a data minimum; a data maximum; a data sample count; a time value signifying the length of the data block; a footer; a container leakage value.

It will be understood that the step of calculating the respiration rate of the produce for each RRDB cycle may be carried out locally, or may be carried out at the remote site, in other words, the logic unit that carries out the step of calculating may be wired into or part of the controller or may be remote therefrom, eg. at the central server.

The method may include measuring other parameters during said extended period, and correlating the calculated respiration rates with said other parameters measured. Such parameters may include, for example, component gas concentration, temperature and humidity.

The invention provides a method for use in monitoring, over an extended period, the respiration rate of produce contained in a container, the container having an atmosphere control system including sensor means to measure the concentration of one or more constituent gases in the container, and a controller programmed to operate in one of two modes, namely atmosphere control mode and respiration rate monitoring mode, wherein:

atmosphere control mode (CA mode) involves measuring the concentration of one or more constituent gases at prescribed atmosphere control (CA mode) sampling intervals; and effecting adjustment of the atmosphere in the container in response to said measurement,

respiration rate monitoring mode (RRM mode) involves measuring the concentration of one or more constituent gases in the container as the produce respires at prescribed respiration rate (RRM mode) sampling intervals,

and wherein the method includes, at intervals during said extended period, suspending said CA mode and initiating said RRM mode and, in accordance with a set RRM mode end trigger, discontinuing said RRM mode and recommencing said CA mode.

The adjustment of the atmosphere in the container may involve effecting selective admission of air into the container.

In accordance with this embodiment, during RRM mode, admission of air into the container is substantially precluded (other than by way of any leakage).

Typically, the container is a leaky transport container, and the method preferably includes identifying a leakage rate of the container. This may be done by, under control of the controller, measuring the leakage rate of the container each time the controller applies said RRM mode.

In this way, at cycle intervals during the voyage, a measure of the change in gas constituents within the container is made and, based on that measured change and the identified leakage of the container, it is possible to determine the respiration rate of said produce at each cycle based on a mathematical model.

The set RRM mode end trigger may be based on the elapsing of a prescribed time in respiration rate monitoring mode. Alternatively, it may be based on the concentration of one or more of the constituent gases in the container as measured during RRM mode. The prescribed time may be in the range between 2 and 6 hours, for example around 4 hours.

Preferably, the method includes providing data to a logic unit, the data including or derived from the RRM mode measurements, the logic unit programmed to calculate from the data a respiration rate of the produce corresponding to each application of the RRM mode.

The CA mode sampling intervals may be in the range between 2 and 30 minutes, for example around 10 minutes.

The RRM sampling intervals may be in the range between 1 second and 10 minutes, for example around 1 minute. Generally, more data points (ie. a shorter interval) will provide improved autocorrelation of the data set and are therefore preferred.

The interval between each initiation of the RRM mode may be between 1 hour and 4 days, for example around 24 hours. The interval should be such that sufficient RRM mode data blocks are gathered during the extended period to enable meaningful monitoring of respiration rate over the period or over a substantial part of the period.

Generally, the interval between each initiation of the RRM mode will be set to be a regular time interval. However, the interval may be governed by another parameter, or may depend on a combination of timing and one or more other parameters. For example, RRM mode may be initiated if a set time duration has not yet elapsed but the oxygen concentration in the container has deviated a prescribed amount from a setpoint, or if the measured temperature in the container has exceeded a set value.

In this regard, RRM mode may be initiated in accordance with a set time interval or the attainment of one or more prescribed parameters of container conditions, whichever is sooner.

A method for tracking is disclosed, over an extended period, the respiration rate of produce contained in a leaky transport container, including the steps of:

receiving data from a controller installed in said transport container, the controller equipped with sensors to measure the concentration of one or more constituent gases within said container, the data representing measurements taken during prescribed periods occurring at intervals during said extended period, each being a respiration rate data block (RRDB) cycle, each RRDB cycle being a period during which substantially no air passage between the interior and the exterior of the transport container other than leakage is permitted;

receiving a value of the leakage rate of the transport container applicable to each RRDB cycles;

calculating, from said data and from said leakage rate, a respiration rate of the produce for each RRDB cycle.

The respiration rate may be calculated from a measure of oxygen depletion over the RRDB cycle.

A system for tracking is disclosed over an extended period, the respiration rate of produce contained in a leaky transport container, including the steps of:

means for measuring, at intervals during said extended period, over a prescribed period, being a respiration rate data block (RRDB) cycle, the concentration of one or more constituent gases in the transport container as the produce respires, substantially no air passage between the interior and the exterior of the transport container other than leakage having been allowed during said RRDB cycle;

means for storing said measurements of concentrations of said one or more constituent gases;

means for measuring and/or storing a leakage rate of the transport container;

means for calculating from said measurements of concentrations of said one or more constituent gases and said leakage rate, a respiration rate of the produce for each RRDB cycle.

The invention provides, in a further aspect, a system for use in monitoring, over an extended period, the respiration rate of produce contained in a container, the container having an atmosphere control system including sensor means to measure the concentration of one or more constituent gases in the container, the system including a controller operably connectable to the sensor means and operably connected to a means to effect adjustment of the atmosphere in the container, the controller programmed to operate in one of two modes, namely atmosphere control mode and respiration rate monitoring mode, wherein:

atmosphere control mode (CA mode) involves measuring, under control of the controller and using the sensor means, the concentration of one or more constituent gases at prescribed atmosphere control (CA mode) sampling intervals; and, under control of the controller and using the atmosphere adjustment means, adjusting the atmosphere in the container in response to said measurement, and

respiration rate monitoring mode (RRM mode) involves measuring under control of the controller and using the sensor means, the concentration of one or more constituent gases in the container as the produce respires at prescribed respiration rate (RRM mode) sampling intervals,

and wherein the controller is programmed to, at intervals during said extended period, suspend said CA mode and initiate said RRM mode and, in accordance with a set RRM mode end trigger, discontinue said RRM mode and recommence said CA mode.

The means to effect adjustment of the atmosphere in the container may be means to effect selective admission of air into the container.

Hence, in RRM mode, there is substantially no admission of air into the container (other than by way of any leakage).

Typically, the container is a leaky transport container, and the controller may be programmed to record a leakage rate of the container. In a preferred embodiment, the system includes means for, under control of the controller, measuring a leakage rate of the container in accordance with employing said RRM mode.

Preferably, the system includes means for providing data to a logic unit, the data representing or derived from the RRM mode measurements (and, if appropriate, container leakage rate), the logic unit programmed to calculate from the data a respiration rate of the produce corresponding to each application of the RRM mode. Said means for providing data to a logic unit may comprise remote wireless means programmed to communicate said data during said extended period.

The invention, then, provides a system and method which affords tracking of the respiration rate of perishables in a transport container during a voyage of that container, including, at cycle intervals during the voyage, obtaining a measure of the change in gas constituents within the container (such as a measure of oxygen depletion over a defined period) and, based on that measured change (and, if appropriate, a measure of leakage of the container), determining the respiration rate of said produce at each cycle based on a mathematical model.

When applied in an atmosphere control container, which includes ongoing monitoring of the atmosphere in the container and adjusting it by selectively admitting ambient air, the invention involves regularly interrupting that atmosphere control for a defined period to take the respiration rate measurements.

It should be noted that, while experiments have been conducted in the past to measure respiration rates of produce (eg. to determine the effect of different conditions on respiration, to test stress levels of different fruits and vegetables and to provide useful information in determining the best conditions for subsequent transport or storage of the produce), this has conventionally been done in laboratory conditions, generally in sealed containers (respirometers). As will be appreciated by the skilled reader, this is very different to gathering data during a voyage itself to allow the calculation of dynamic respiration rate at multiple points in time across that voyage.

### Brief description of the drawings

Figure 1 diagrammatically illustrates a controlled atmosphere transport container;

Figure 2 is a flow diagram illustrating an embodiment of the method of the invention;

Figure 3 illustrates the individual process flows of the control logic loops of an embodiment of the method of the invention; and

Figures 4 and 5 illustrate graphically the results of two trials carried out using an embodiment of the invention.

### Detailed description of exemplary embodiment

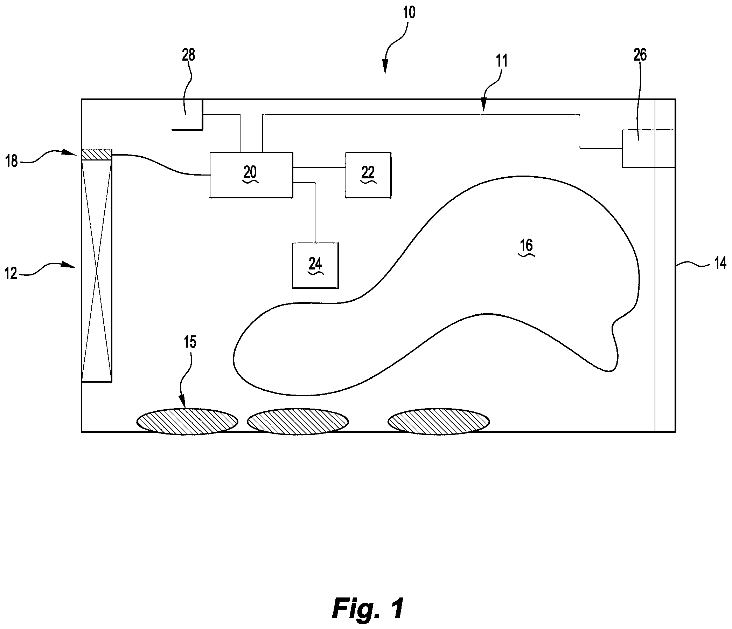

Figure 1 diagrammatically illustrates a controlled atmosphere transport container such as a refrigerated shipping container (or 'reefer') 10, with refrigeration unit 12 and doors 14. The container is loaded with hydrated lime held in $CO_2$ transmissible bags 15, to absorb $CO_2$, in a quantity selected for the particular cargo type and size (cargo shown diagrammatically as reference 16).

Container 10 is fitted with valve means diagrammatically shown as reference 18, which includes in air inlet means, and may also include an air outlet means and/or one or more fan means to drive air into or out of container 10. Valve means 18 is connected to and controlled by controller 20, which is also connected to sensors to measure gas concentrations within container atmosphere 11, including an oxygen sensor 22 and (optionally) a $CO_2$ sensor 24.

As explained in more detail in US Patent 8,677,893, in accordance with measurement of oxygen concentration by sensor 22, controller 20 operates valve means 18 to cause or permit ambient atmosphere to enter container 10, the hydrated lime bags 14 removing $CO_2$ from the container atmosphere 11 at a predetermined rate in such a way that the $CO_2$ concentration within the chamber atmosphere is maintained at a prescribed non-zero level.

It will be understood that the present invention is independent of the atmosphere control methodology applied. For example, the present invention is equally applicable to a membrane CA system, in which container atmosphere is drawn through a membrane of selected permeability to a particular gas. Indeed, the present invention in at least some forms can be used with a transport container not equipped with a CA system.

After harvesting, fruit and other perishable items continue respiring, using up oxygen and giving off $CO_2$. The rate of respiration can fluctuate widely, and is affected greatly by factors including temperature and oxygen levels in the atmosphere around the products.

The respiration rate of the produce can be seen as its heart rate; it increases or decreases in accordance with the activity of the produce. Higher respiration rates are associated with increased ripening and therefore are a good pointer to the maturity of the fruit. Respiration data can therefore have important value:

- It provides information on the maturity of the produce when it was loaded into the container, which provides an indication of the reliability of the suppliers.

- It provides a snapshot of how the cargo maturity varies with reference to different suppliers, different regions, and different seasons.

- It allows importers to estimate the shelf life of produce on arrival at destination shipping points, giving them information on how quickly the produce must be sold.

- If the arrival quality is poor, the data provides information to the shippers as to where the problem occurred and why.

In accordance with one form of the present invention, the respiration rate is measured as follows:

a) Measure the leakage rate of the empty container in a static situation before cargo is loaded into it.

b) Measure the net weight of the cargo (or input that value as per the Bill of Lading).

c) At regular intervals (such as once a day) use the controller 20 to shut the valves and allow $O_2$ to deplete and $CO_2$ to increase by cargo respiration. Measure the resulting data over a certain period (referred to as a respiration rate monitoring mode [RRM mode] period).

d) Transmit the measured data with a particular RRM mode tag to a central server for analysis.

e) By way of a program at the server, identify the data block identified with the tag (referred to as the respiration rate data block, RRDB).

f) With the knowledge of the leakage rate, process the data within the RRDB to calculate the respiration rate RR (calculated as ml $O_2$/Kg-hr or ml $CO_2$/ Kg-hr).

The calculation of respiration rate is somewhat complex, as live data tends to fluctuate significantly. The inventors have therefore devised a novel mathematical technique for the analysis. It is necessary to factor in the container leakage rate and cargo weight in order to calculate the respiration rate.
Most if not all shipping containers have inherent leakage. Causes of leakage in such containers is twofold:

- Firstly, leakage through the controller valves. This is generally relatively accurately known for each valve.

- Secondly, leakage through doors, walls, roof and floor of container. This needs to be measured, as it varies with every container, and often varies over time. This leakage can depend on many factors.

The applicant's MAXtend system classifies containers into three bands on the basis of leakage, CI.1 being the least leaky, CI. 3 the most leaky.
Since a static leakage measurement before the voyage is often not a true measure of dynamic leakage occurring while the container is on a vessel, the preferred form of the method of the invention includes in-transit measurement of leakage rates at the time (generally, shortly before) respiration rate measurements are made. This affords a true dynamic picture.
The dynamic leakage rate is measured as follows:
For each data block sampling, a leakage measurement means 26 is used in carrying out the following process to obtain a measure of container leakage:

- Ensure no path from inside to outside of container other than leakage (eg. controller closes all valves in valve means 18).

- Using a fan in means 26, drive air into or out of container.

- Use a differential pressure gauge in means 26 to measure ΔP from inside to outside of container.

- Once ΔP reaches prescribed point (eg. 250 Pa) use means 26 to adjust the fan to hold at that point.

- Using means 26, measure the air flow provided by the fan, either from fan characteristics, eg. based on fan speed, or measured by a flow meter.

MAXtend container leak classifications are based on measured flow (SLPM) at a maintained pressure of 250 Pa.

Other measures can be used to determine leakage for each RRDB cycle. For example, this can involve a measure of rate of change of $\Delta P$. In accordance with this approach, the system is configured to operate the fan to drive $\Delta P$ to a prescribed value, and then to measure the time taken for it to drop by a predetermined amount. A further alternative involves releasing a dose of trace gas and measuring the change of concentration of that trace gas over time.

The MAXtend controller range includes units able to measure and log either $O_2$, or both $O_2$ and $CO_2$. More recently, and particularly for high value cargo, the controllers are also equipped with a GPRS communications module 28 connected to controller 20, which allows them to auto-transmit logged data (when in range of a suitable communications network) to the MAXtend central server for storing and analysis.

In addition to controlling the valve operation in accordance with the applicant's CA method, this allows quality control monitoring of CA data at critical points of the transit, including:

- Soon after gassing & installation and before vessel departure (at which point there is often an opportunity to rectify issues).

- At intermediate & transhipment ports.

- At destination.

In addition the operation of controller 20 can include auto data scanning and alerts, and monitoring and logging of other parameters, such as temperature and humidity.

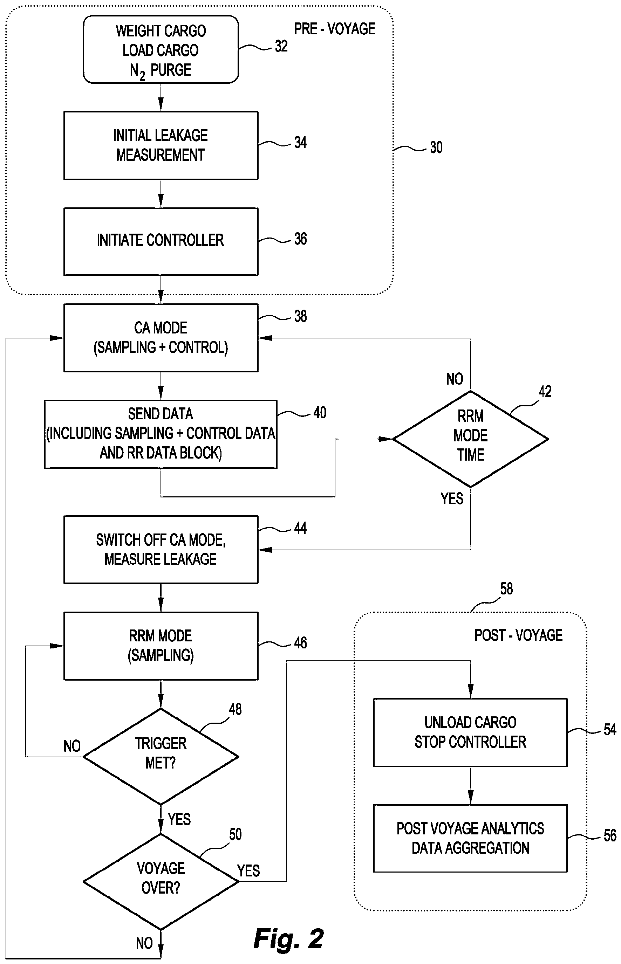

Figure 2 provides a flow diagram illustrating an embodiment of the method of the invention.

In the process flow illustrated, in a pre-voyage phase 30 the cargo 16 to be shipped is weighed and loaded into transport container 10, and a nitrogen purge is conducted (step 32). An initial leakage measurement is then made (step 34, methodology as discussed above) and recorded, and the controller initiated (step 36) prior to the container being loaded.

From that point onwards the container is considered to be in transit and, generally, subject to atmosphere control as regulated by programmed controller 20. Normal mode is thus controlled atmosphere mode (CA mode - step 38), with regular measurement of one of more of the constituent gases in the container and adjustment of the atmosphere accordingly (by causing or permitting inflow of air from the outside of the container, eg. by opening a valve or valves and/or operating a fan or fans for forced flow). During CA mode the data regarding gas measurements and valve control is recorded and saved in accordance with a set sampling frequency (step 40). After a prescribed time interval (decision box 42) CA mode is suspended and a leakage measurement is made at step 44 (as discussed above) and the data recorded, and the process switches into respiration rate monitoring mode (RRM mode - step 46), as discussed above and in further detail below. The RRM mode data is recorded by the controller, and terminated in accordance with the programmed trigger (decision box 48), as discussed further below (a prescribed length of time, or earlier if the $O_2$ concentration departs from its setpoint by a set amount). If the container is still in transit the process switches back into CA mode and the process repeats. As the figure shows, the data recorded and stored by the controller, including the data gathered during RRM mode (the respiration rate data block RRDB) is regularly transmitted wirelessly by way of a GSM or GPRS modem to a remote server for near-real-time update and analysis.

Once the voyage is over (decision box 50) and the process is in a post-voyage phase 58, the controller operation can be terminated, the cargo unloaded (step 54), and any post-voyage activity completed (step 56). The controller can then be re-initiated for the next voyage.

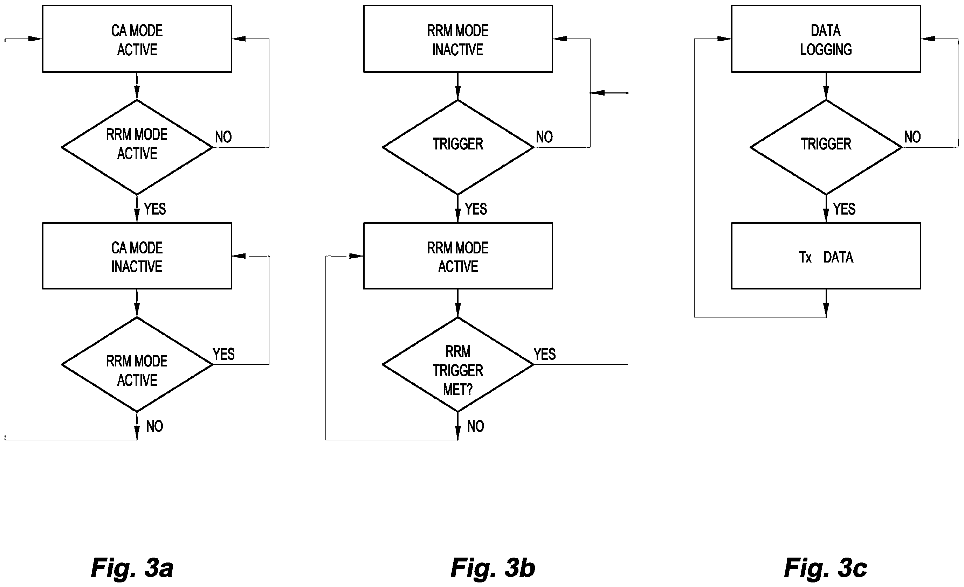

Figure 3 illustrates the individual process flows of the logic loops controlling CA mode (Fig. 3a), RRM mode (Fig. 3b) and data logging and transmission (Fig. 3c) in accordance with an embodiment of the invention.

As Figure 3a shows, the logic flow dictates that CA mode and RRM mode are mutually exclusive, CA mode being deactivated on triggering of RRM mode. Fig. 3b shows the logic flow governing the triggering of RRM mode in accordance with the regular intervals programmed into controller 20. The RRM mode triggering interval in the embodiments tested - see below - was 24 hours. The decision block 'RRM TRIGGER MET' operates in accordance with the programmed trigger (ie. equivalent to step 48 in Figure 2), as discussed further below (a prescribed length of time, being 4 hours in the embodiments tested, or earlier if the $O_2$ concentration departs from its setpoint by a set amount, eg. by 0.5% of the $O_2$ setpoint). Fig. 3c shows the logic flow managing the data logging and transmission, which is governed by a trigger being a regular time interval (ie. decoupled from the timing of the RRM mode trigger, unlike the embodiment illustrated in Figure 2). In the embodiments tested the data logging interval was 1 minute, and the transmission interval was 6 hours (interval between attempts to find a network and transmit data via GPRS modem). Further discussion of an example of the logging and wireless transmission of data can be found in PCT/AU2014/050215.

**Test units and result graphs from test units**

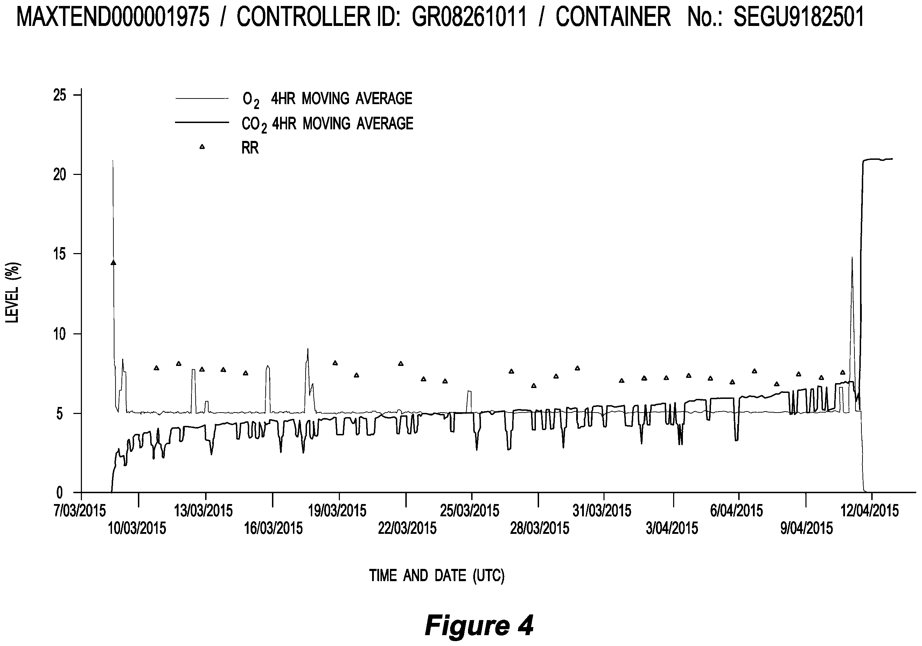

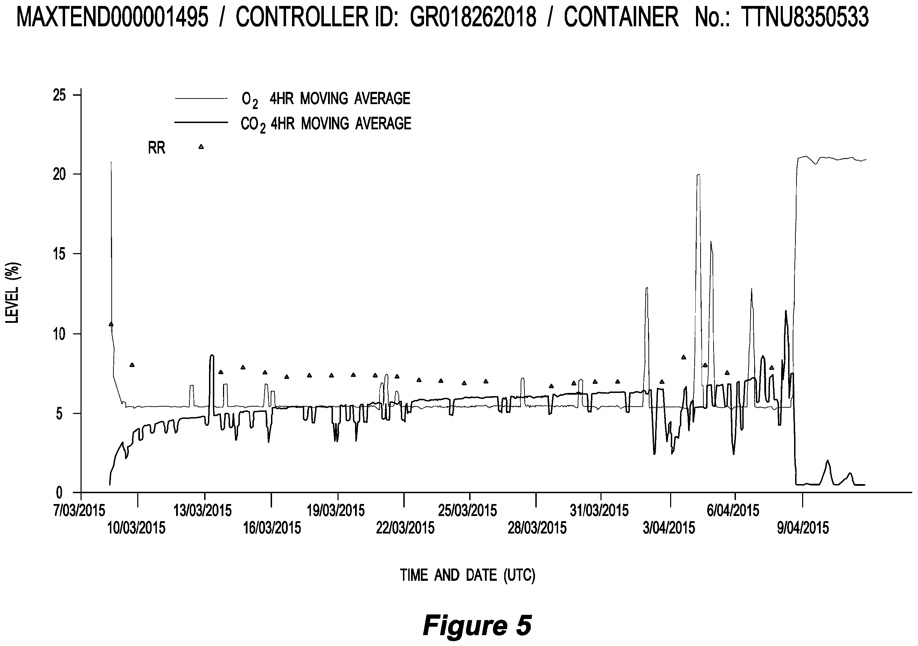

Figures 4 and 5 graphically illustrate the results of the invention conducted by the inventors on data from two different confidential experimental test shipments, from two different containers of avocados, during the course of voyage of approximately 5 week duration, depicting $O_2$ concentration, $CO_2$ (in %, shown as 4hr moving average, to smooth out artefact in the measurements), and the daily calculated respiration rate RR (ml $O_2$/Kg-hr). In both cases a 5% $O_2$ setpoint was used. General gas measurement (and CA control) in CA mode was carried out every 10 minutes (ie. a sampling rate of 6 times per hour). During each RR measurement period (ie. gathering the RR data block in RRM mode) $O_2$ was measured every minute (ie. a sampling rate of 60 times per hour). The RR data block was gathered over a 4 hour period, terminated in the case of a significant deviation from the $O_2$ setpoint ($\pm$0.5%).

In Figure 4 it will be noted that in general the calculated RR was relatively stable throughout the voyage. In Figure 5 it will be noted that again the calculated RR was relatively stable, showing generally a gentle drop through most of the voyage. Towards the final days the graph shows three large spikes in $O_2$ concentration. The cause of these is not clear, but possibly due to violent movement of the container or to a temporary loss of power to the refrigeration unit. Generally, it can be seen that the RR rises following oxygen spikes. What both graphs show is that the calculation of RR in accordance with the invention appears to be a valid measure, potentially providing very valuable information for analysis during or after the shipment.

The labelling at the head of the graphs in Figures 4 and 5 identifies, in order: the container's GPRS communication unit; the container's controller unit; the container.

The use of data loggers allow monitoring of conditions within a shipping container, allowing analysis across each voyage. Use of wireless communications allows this data to be relayed to a central server remotely and with minimum delay, and as the data set grows analysis at the server across multiple containers, multiple vessels, multiple routes, multiple voyages and multiple cargo types and sizes, etc, provides a very valuable source of information for all stakeholders in the chain, including shippers, producers, importers, insurers, and dock handling companies.

In addition to analysis of conditions within the container (in particular, temperature, pressure, gas components), the present invention thus provides a way of monitoring the health of the produce through calculation of respiration rate over a voyage. The inventors implemented this for the trials by modifying an existing CA controller. In particular, as described above, in addition to normal operation, the controller was programmed to initiate respiration rate monitoring mode (RRM mode) by, once a day, shutting all valves, and allowing $O_2$ to deplete and $CO_2$ to increase by natural cargo respiration. The only air transfer across the container wall is therefore due to leakage. During this time (the respiration rate data block RRDB cycle period), data is measured and logged, that being $O_2$ concentration, and/or $CO_2$ concentration. Other variables, may also be measured and logged, such as temperature.

The measured data is transmitted to a central server for analysis. This is preferably done in transit (if the controller is equipped with a communications modem), or alternatively can be done after transit when the data log is downloaded.

A logic unit at the server is programmed to identify each RRDB, by virtue of the prescribed RRM mode tag attached to the block of data associated with RRM application. The data within this block is then processed to calculate the respiration rate (calculated as ml $O_2$/Kg-hr consumed or ml $CO_2$/Kg-hr produced).

The data block for each RRDB cycle passed from the controller to the central server may a number of different items of information, including parameters measured and values determined from those parameters. In addition to headers, footers, appropriate identifiers, timestamps, data block time length values, etc., such information may include data minimum, maximum and mean values, data correlation coefficients, data variance values, data sample counts, data regression slope values (ie. the regression slope of the measured concentration of one or more of the constituent gases in the container) and leakage values. As will be understood, the respiration rate for each RRDB cycle may be calculated from the oxygen value regression slope and mean oxygen measurements. In the case of noisy data, consideration of the sample count, variance, minimum, maximum may be used to determine the reliability of the calculation.

The data block may also include a termination code specifying whether the RRDB cycle was terminated by virtue of the time limit, the oxygen low deviation limit, or the oxygen high deviation limit, and this information may also be employed to determine the reliability of the respiration rate calculation.

As will be understood, RRM mode suspends atmosphere control and can therefore interfere with the CA process, but with proper selection of programmed parameters this interference can be kept to a minimum. In fact ripening is reduced during this period, as there is less $O_2$ than would be the case under normal operation. The data block cycle time (ie. the time in RRM mode) is set for a prescribed duration (eg. 4 hours), but is terminated earlier if the $O_2$ concentration departs from its setpoint by a prescribed value, to minimise this interference. In the embodiments tested the allowed deviation, which could be adjusted to any value in the range 0-1%, was set at 0.5%. That means, with an $O_2$ concentration setpoint of 5%, RRM mode was only maintained if 4.5% < $O_2$ concentration < 5.5%.

As discussed above, monitoring and analysis of cargo conditions in accordance with the present invention allows the calculation of the respiration rate of the goods at points throughout the shipment, which thus provides a dynamic indication of the ripening state. This can be done in real time by the controller, or transmitted to the MAXtend server for near real time analysis, or (in the absence of GPRS capability) after the shipment has been received and the controller accessed.

Analysing the resulting RR data provides very valuable information. For example, the RR data in the early part of a voyage provides an indication of the quality of the cargo. High RR at a particular point in the voyage provides an indication of an interruption of normal operation. For example, at a transhipment location, a sudden rise in RR might suggest the refrigeration unit, having been disconnected from shore power or shipboard power, was then not promptly reconnected to another source of power (shipboard power or shore power, or to a genset).

This can then provide objective data useful in, for example, cargo insurance claim negotiations. The data can assist the various stakeholders in the value chain in understanding, for example, concentration of claims from particular customers or regions or under particular climate effects (eg. seasonal).

Further, particularly for high value or very sensitive produce, the RR may be used as direct feedback into the dynamic CA operation. In this form, the controller calculating the RR in real time and adjusting the atmosphere to maintain a desired RR throughout the voyage, and therefore minimise stress on the produce.

Whilst it has been convenient to describe the invention herein in relation to particularly preferred embodiments, it is to be appreciated that other constructions and arrangements are considered as falling within the scope of the invention. Various modifications, alterations, variations and/or additions to the constructions and arrangements described herein are also considered as falling within the scope and ambit of the present invention.

The following passages set out the parameters used in the trials discussed above with reference to Figures 4 and 5 and the calculations used to derive RR values.

**Mitsubishi Australia Ltd MAXtend active respiration rate calculations**

In operation the AVCA controller intermittently commands the shutting of the atmosphere control valves and the measurement of the container oxygen fraction until the shorter of:

- •    1: the oxygen concentration deviates from the setpoint by more than a prescribed amount, or

- •    2: elapse of a predetermined time.

At that point statistics are performed on the accumulated data and the slope of the linear regression line of oxygen concentration overtime is used, in conjunction with the known valve leakage, measured container leakage and load properties to estimate the respiration rate of oxygen consumption.

The flow-pressure curve of closed valves was measured as approximately f[SLPM] = (0.8/400) * P[Pa]

MAXtend container leak classifications are based on measured flow [SLPM] at a maintained pressure of 250 [Pa]

*flow[SLPM] at 250 [Pa] by container classification.*

|         | minimum | average | maximum |
|---------|---------|---------|---------|
| Class 1 | 0       | 13      | 26      |
| Class 2 | 26      | 29.5    | 33      |
| Class 3 | 33      | 39      | 45      |

Assuming a linear model starting at (0,0) the flow-pressure curve slopes for these values is as follows.

*flow-pressure slope [SLPM/Pa] by container classification.*

|         | minimum | average  | maximum |
|---------|---------|----------|---------|
| Class 1 | 0/250   | 13/250   | 26/250  |
| Class 2 | 26/250  | 29.5/250 | 33/250  |
| Class 3 | 33/250  | 39/250   | 45/250  |

This calculation assumes that the container leakage is primarily driven by the pressure drop generated by the operation of the container fan, and occurs in the resulting low and high pressure areas close to the fan.

The pressure drop generated by the fan is denoted Pf [Pa]

Atmospheric pressure is denoted Patm[Pa]

The pressure immediately upstream of the fan will be Patm-Pf/2 while the pressure immediately downstream will be Patm+Pf/2.

Now, the leakage driving pressure in these areas will be:

Upstream:

$$Pl = (Patm - Pf/2) - Patm = -Pf/2$$

Downstream:

$$Pl = (Patm + Pf/2) - Patm = Pf/2$$

o2 change due to valve leakage (do2v)

External air leaking in:

$$o2in[SLPM) = Pl[Pa] * Lv[SLPM\ Pa\text{-}1] * o2atm[fraction]$$

Internal air leaking out:

$$o2out[SLPM) = Pl[Pa] * Lv[SLPM\ Pa\text{-}1] * o2[fraction]$$

Total:

$$do2v = o2in - o2out$$

$$Pl * Lv * (o2atm - o2)$$

Similarly, o2 change due to container leakage [do2l]

$$do2l = Pl * Lc * (o2atm - o2)$$

Now, the total flow balance of o2 is:

$$do2 = do2v + do2l - do2r$$

(where do2r is the change in o2 due to respiration)

So:

$$do2r = do2v + do2l - do2$$

Now do2 is measured and do2v and do2l calculated, so that do2r can be calculated, as can, given the cargo properties, rro2.

do2 is the measurement returned by the rr measurement.

Change in oxygen due to valve leakage

$$do2v = Lv * Pl * (o2atm - o2avg)$$

Change in oxygen due to container leakage

$$do2l = Lc * Pl * (o2atm - o2avg)$$

Change in oxygen due to respiration rate:

$$do2r = do2v + do2l - do2$$

$$rro2 = do2r * 60 * 1000 / Mp$$

$$([SLPM]*[min\ h\text{-}l]*[ml\ l\text{-}l]*[kg\text{-}1]\quad [ml\ kg\text{-}1\ h\text{-}1])$$

The Maxtend AVCA7 controller process returns a block of statistics as an XML block (corresponding to the RRDB) embedded in the GPRS modem data stream.

## Claims

1.   A method for use in monitoring, over an extended period, the respiration rate of produce contained in a container, the container having an atmosphere control system including sensor means to measure the concentration of one or more constituent gases in the container, and a controller programmed to operate in one of two modes, namely atmosphere control mode and respiration rate monitoring mode, wherein:

> atmosphere control mode (CA mode) involves measuring the concentration of one or more constituent gases at prescribed atmosphere control (CA mode) sampling intervals; and effecting adjustment of the atmosphere in the container in response to said measurement,
> respiration rate monitoring mode (RRM mode) involves measuring the concentration of one or more constituent gases in the container as the produce respires at prescribed respiration rate (RRM mode) sampling intervals, and wherein the method includes, at intervals during said extended period, suspending said CA mode and initiating said RRM mode and, in accordance with a set RRM mode end trigger, discontinuing said RRM mode and recommencing said CA mode.

2.   The method of claim 1, wherein the adjustment of the atmosphere in the container involves effecting selective admission of air into the container.

3.   The method of claim 1 or claim 2, including identifying a leakage rate of the container.

4.   The method of claim 3, wherein the leakage rate of the container is measured under control of the controller each time the controller applies said RRM mode.

5.   The method of any preceding claim, wherein the RRM mode end trigger is based on the elapsing of a prescribed time in RRM mode.

6. The method of any one of claims 1 to 4, wherein the RRM mode end trigger is based on the concentration of one or more of the constituent gases in the container as measured during RRM mode.

7. A system for use in monitoring, over an extended period, the respiration rate of produce contained in a container, the container having an atmosphere control system including sensor means to measure the concentration of one or more constituent gases in the container, the system including a controller operably connected to the sensor means and including or operably connected to a means to effect adjustment of the atmosphere in the container, the controller programmed to operate in one of two modes, namely atmosphere control mode and respiration rate monitoring mode, wherein:

atmosphere control mode (CA mode) involves measuring, under control of the controller and using the sensor means, the concentration of one or more constituent gases at prescribed atmosphere control (CA mode) sampling intervals; and, under control of the controller and using the atmosphere adjustment means, adjusting the atmosphere in the container in response to said measurement,

respiration rate monitoring mode (RRM mode) involves measuring under control of the controller and using the sensor means, the concentration of one or more constituent gases in the container as the produce respires at prescribed respiration rate (RRM mode) sampling intervals,

and wherein the controller is programmed to, at intervals during said extended period, suspend said CA mode and initiate said RRM mode and, in accordance with a set RRM mode end trigger, discontinue said RRM mode and recommence said CA mode.

8. The system of claim 7, wherein the means to effect adjustment of the atmosphere in the container includes means to effect selective admission of air into the container.

9. The system of claim 7 or claim 8, wherein the controller is programmed to record a leakage rate of the container, and the system includes means for, under control of the controller, measuring a leakage rate of the container in accordance with employment of said RRM mode.

**Patentansprüche**

1. Ein Verfahren zur Verwendung beim Überwachen, über einen erweiterten Zeitraum, der Atmungsrate von Waren, die in einem Container enthalten sind, wobei der Container ein Atmosphärenkontrollsystem aufweist, das Sensormittel, um die Konzentration von einem oder mehreren Komponentengasen in dem Container zu messen, und einen Kontroller umfasst, der programmiert ist, um in einem der zwei Modi zu arbeiten, nämlich dem Atmosphärenkontrollmodus und dem Atmungsratenüberwachungsmodus, wobei:

der Atmosphärenkontrollmodus (CA-Modus) das Messen der Konzentration eines oder mehrerer Komponentengase in vorgeschriebenen Atmosphärenkontroll-(CA-Modus)-Abtastintervallen; und das Bewirken der Anpassung der Atmosphäre in dem Container als Reaktion auf die Messung einschließt,

der Atmungsratenüberwachungsmodus (RRM-Modus) das Messen der Konzentration eines oder mehrerer Komponentengase in dem Container in vorgeschriebenen Atmungsraten-(RRM-Modus)-Abtastintervallen, während die Waren atmen, einschließt, und wobei das Verfahren, in Intervallen während des erweiterten Zeitraums, das Suspendieren des CA-Modus und das Initiieren des RRM-Modus und, gemäß einem festgesetzten RRM-Modusbeendigungsauslöser, das Abbrechen des RRM-Modus und das Wiederbeginnen des CA-Modus umfasst.

2. Verfahren gemäß Anspruch 1, wobei die Anpassung der Atmosphäre in dem Container das Bewirken von selektiver Zufuhr von Luft in den Container einschließt.

3. Verfahren gemäß Anspruch 1 oder Anspruch 2, das das Identifizieren einer Leckagerate des Containers umfasst.

4. Verfahren gemäß Anspruch 3, wobei die Leckagerate des Containers jedes Mal, wenn der Kontroller den RRM-Modus anwendet, unter Kontrolle des Kontrollers gemessen wird.

5. Verfahren gemäß einem der vorhergehenden Ansprüche, wobei der RRM-Modusbeendigungsauslöser auf dem Ablaufen einer vorgeschriebenen Zeit im RRM-Modus basiert.

6. Verfahren gemäß einem der Ansprüche 1 bis 4, wobei der RRM-Modusbeendigungsauslöser auf der Konzentration des einen oder der mehreren Komponentengase in dem Container, wie während des RRM-Modus gemessen, basiert.

7. Ein System zur Verwendung beim Überwachen, über einen erweiterten Zeitraum, der Atmungsrate von Waren, die in einem Container enthalten sind, wobei der Container ein Atmosphärenkontrollsystem aufweist, das Sensormittel umfasst, um die Konzentration von einem oder mehreren Komponentengasen in dem Container zu messen, wobei das System einen Kontroller umfasst, der betriebsbereit mit dem Sensormittel verbunden ist und ein Mittel umfasst oder betriebsbereit mit diesem verbunden ist, um die Anpassung der Atmosphäre in dem Container zu bewirken, wobei der Kontroller programmiert ist, um in einem von zwei Modi zu arbeiten, nämlich dem Atmosphärenkontrollmodus und dem Atmungsratenüberwachungsmodus, wobei:

der Atmosphärenkontrollmodus (CA-Modus) das Messen, unter Kontrolle des Kontrollers und unter Verwendung des Sensormittels, der Konzentration eines oder mehrerer Komponentengase in vorgeschriebenen Atmosphärenkontroll-(CA-Modus)-Abtastintervallen; und, unter Kontrolle des Kontrollers und unter Verwendung des Atmosphärenanpassungsmittels, das Anpassen der Atmosphäre in dem Container als Reaktion auf die Messung einschließt,
der Atmungsratenüberwachungsmodus (RRM-Modus) das Messen, unter Kontrolle des Kontrollers und unter Verwendung des Sensormittels, der Konzentration eines oder mehrerer Komponentengase in dem Container in vorgeschriebenen Atmungsraten(RRM-Modus)-Abtastintervallen, während die Waren atmen, einschließt, und wobei der Kontroller programmiert ist, um in Intervallen während des erweiterten Zeitraums den CA-Modus zu suspendieren und den RRM-Modus zu initiieren, und, gemäß einem festgesetzten RRM-Modusbeendigungsauslöser, den RRM-Modus abzubrechen und den CA-Modus wiederzubeginnen.

8. System gemäß Anspruch 7, wobei das Mittel zum Bewirken der Anpassung der Atmosphäre in dem Container Mittel zum Bewirken von selektiver Zufuhr von Luft in den Container umfasst.

9. System gemäß Anspruch 7 oder Anspruch 8, wobei der Kontroller programmiert ist, um eine Leckagerate des Containers aufzunehmen, und das System unter Kontrolle des Kontrollers Mittel umfasst, um eine Leckagerate des Containers gemäß dem Einsatz des RRM-Modus zu messen.

**Revendications**

1. Un procédé pour une utilisation dans la surveillance, sur une période prolongée, du taux de respiration de marchandises contenues dans un conteneur, le conteneur ayant un système de contrôle d'atmosphère incluant un moyen formant capteur pour mesurer la concentration d'un ou de plusieurs gaz constitutifs dans le conteneur, et un contrôleur programmé pour fonctionner dans un mode parmi deux, à savoir un mode contrôle de l'atmosphère et un mode surveillance du taux de respiration, dans lequel :

le mode contrôle de l'atmosphère (mode CA) implique de mesurer la concentration d'un ou de plusieurs gaz constitutifs à des intervalles d'échantillonnage de contrôle de l'atmosphère (mode CA) prescrits ; et d'effectuer un ajustement de l'atmosphère dans le conteneur en réponse à ladite mesure,
le mode surveillance du taux de respiration (mode RRM) implique de mesurer la concentration d'un ou de plusieurs gaz constitutifs dans le conteneur alors que la marchandise respire à des intervalles d'échantillonnage du taux de respiration (mode RRM) prescrits,
et le procédé incluant, à des intervalles durant ladite période prolongée, le fait de suspendre ledit mode CA et de lancer ledit mode RRM et, conformément à un déclencheur de fin de mode RRM établi, le fait d'interrompre ledit mode RRM et de recommencer ledit mode CA.

2. Le procédé de la revendication 1, dans lequel l'ajustement de l'atmosphère dans le conteneur implique d'effectuer une admission sélective d'air dans le conteneur.

3. Le procédé de la revendication 1 ou de la revendication 2, incluant le fait d'identifier un taux de fuite du conteneur.

4. Le procédé de la revendication 3, dans lequel le taux de fuite du conteneur est mesuré sous contrôle du contrôleur à chaque fois que le contrôleur applique ledit mode RRM.

5. Le procédé de n'importe quelle revendication précédente, dans lequel le déclencheur de fin de mode RRM est basé sur l'écoulement d'un temps prescrit en mode RRM.

**6.** Le procédé de n'importe laquelle des revendications 1 à 4, dans lequel le déclencheur de fin de mode RRM est basé sur la concentration d'un ou de plusieurs gaz constitutifs dans le conteneur tel que mesuré durant le mode RRM.

**7.** Un système pour une utilisation dans la surveillance, sur une période prolongée, du taux de respiration de marchandises contenues dans un conteneur, le conteneur ayant un système de contrôle d'atmosphère incluant un moyen formant capteur pour mesurer la concentration d'un ou de plusieurs gaz constitutifs dans le conteneur, le système incluant un contrôleur fonctionnellement raccordé au moyen formant capteur et incluant ou étant fonctionnellement raccordé à un moyen pour effectuer un ajustement de l'atmosphère dans le conteneur, le contrôleur étant programmé pour fonctionner dans un mode parmi deux, à savoir un mode contrôle de l'atmosphère et un mode surveillance du taux de respiration, dans lequel :

le mode contrôle de l'atmosphère (mode CA) implique de mesurer, sous contrôle du contrôleur et à l'aide du moyen formant capteur, la concentration d'un ou de plusieurs gaz constitutifs à des intervalles d'échantillonnage de contrôle de l'atmosphère (mode CA) prescrits ; et, sous contrôle du contrôleur et à l'aide du moyen d'ajustement de l'atmosphère, d'ajuster l'atmosphère dans le conteneur en réponse à ladite mesure,
le mode surveillance du taux de respiration (mode RRM) implique de mesurer sous contrôle du contrôleur et à l'aide du moyen formant capteur, la concentration d'un ou de plusieurs gaz constitutifs dans le conteneur alors que la marchandise respire à des intervalles d'échantillonnage du taux de respiration (mode RRM) prescrits, et dans lequel le contrôleur est programmé, à des intervalles durant ladite période prolongée, pour suspendre ledit mode CA et lancer ledit mode RRM et, conformément à un déclencheur de fin de mode RRM établi, interrompre ledit mode RRM et recommencer ledit mode CA.

**8.** Le système de la revendication 7, dans lequel le moyen pour effectuer l'ajustement de l'atmosphère dans le conteneur inclut un moyen pour effectuer une admission sélective d'air dans le conteneur.

**9.** Le système de la revendication 7 ou de la revendication 8, dans lequel le contrôleur est programmé pour enregistrer un taux de fuite du conteneur, et le système inclut un moyen destiné, sous contrôle du contrôleur, à mesurer un taux de fuite du conteneur conformément à l'emploi dudit mode RRM.

Fig. 1

**Fig. 2**

**Fig. 3a**

**Fig. 3b**

**Fig. 3c**

EP 3 328 749 B1

MAXTEND000001975 / CONTROLLER ID: GR08261011 / CONTAINER No.: SEGU9182501

*Figure 4*

EP 3 328 749 B1

*Figure 5*

EP 3 328 749 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 2014050215 W
- WO 2012149611A1 A
- WO 2006086827A1 PCT
- US 20130013099 A1
- US 8677893 B